# EUROPÄISCHE PATENTSCHRIFT

(11) **EP 3 280 775 B1**
(45) Veröffentlichungstag und Bekanntmachung des Hinweises auf die Patenterteilung: **07.06.2023**
(21) Anmeldenummer: 16717291.5
(22) Anmeldetag: 07.04.2016
(51) Int. Cl.: C09J 5/06, C09J 5/04, A43B 9/12, A43D 25/20

(54) **VERFAHREN ZUM VERKLEBEN VON SUBSTRATEN MIT KLEBSTOFFEN**
PROCESS FOR THE BONDING OF SUBSTRATES BY ADHESIVES
PROCÉDÉ DE COLLAGE DE SUBSTRATS À L'AIDE DE COLLES

(30) Priorität: 07.04.2015 EP 15162616
(43) Veröffentlichungstag der Anmeldung: 14.02.2018
(73) Patentinhaber: Covestro Deutschland AG, 51373 Leverkusen (DE)
(72) Erfinder: TILLACK, Jörg, 42699 Solingen (DE); ACHTEN, Dirk, 51375 Leverkusen (DE); ARNDT, Wolfgang, 41542 Dormagen (DE); WAGNER, Roland, 51375 Leverkusen (DE); MELCHIORS, Martin, 42799 Leichlingen (DE); STECK, Cornelia, 46147 Oberhausen (DE)
(74) Vertreter: Levpat
(86) Internationale Anmeldenummer: PCT/EP2016/057571
(87) Internationale Veröffentlichungsnummer: WO 2016/162394

(56) Entgegenhaltungen:
- EP-A1- 0 058 300
- WO-A1-98/15601
- US-A- 4 295 910

## Beschreibung

Die vorliegende Erfindung betrifft ein Verfahren zum Verkleben von Substraten mit einer Klebstoff- und einer Isocyanat-Komponente. Weiterhin betrifft die vorliegende Offenbarung einen nach diesem Verfahren erhältlichen Verbund.

Klebstoffe sind häufig gelöste, thermoplastische Polymere, die auf ein erstes Substrat aufgetragen werden und nach Trocknung auf dem Substrat entweder direkt oder aber nach Wärmeaktivierung klebrig vorliegen. Nach Verpressen mit einem zweiten Substrat, welches entweder unbeschichtet ist oder zuvor ebenfalls mit einer Klebstoffschicht versehen wurde, werden die zwei Substrate miteinander verbunden. Bei einigen wärmeaktivierten Klebstoffen setzt beim Abkühlen eine Kristallisation ein, welche die Eigenschaften der Klebefuge verbessert.

Da es sich bei den oben beschriebenen Systemen um thermoplastische Polymere handelt, kann die Klebefuge durch Erhitzen wieder erweicht werden und die Substrate können wieder voneinander getrennt werden.

Das thermoplastische Verhalten der Klebstoffe führt in manchen Fällen zu Problemen. So kann es vorkommen, dass die Empfindlichkeit der Substrate eine besonders hohe Aktivierungstemperatur nicht tolerieren, in der Anwendung aber Temperaturen oberhalb des Erweichungspunktes des Klebstoffs auftreten, was zu einer unbeabsichtigten Trennung der Substrate während der Anwendung führen könnte.

Beispielhaft sei hier die Verklebung von Schuhsohlen genannt. Speziell bei Sportschuhen werden häufig kristallisierende, aliphatische Polyurethandispersionen eingesetzt. Die Aktivierungstemperatur liegt normalerweise bei 80 °C. Klebefugen, die mit derartigen Klebstoffen hergestellt werden, haben dann anschließend eine Wärmefestigkeit von ca. 60 °C. Die Schuhindustrie verlangt hier allerdings deutlich höhere Wärmefestigkeiten, da die Sportschuhe häufiger in der Waschmaschine bei Temperaturen von 60 °C oder mehr gewaschen werden und eine Delamination der Sohle ausgeschlossen werden soll.

Eine Erhöhung der Wärmebeständigkeit kann z.B. durch den Einsatz von 2-Komponenten (2K)-Klebstoffen erreicht werden. Unter 2K-Klebstoffen versteht man Klebstoffe, bei denen die Komponenten (a) Klebstoff-Komponente und (b) Vernetzer-Komponente aufgrund ihrer Reaktivität in getrennten Gefäßen gelagert werden müssen. Stand der Technik ist, dass die beiden Komponenten kurz vor Applikation gemischt werden und sofort anfangen miteinander zu reagieren, im allgemeinen ohne zusätzliche Aktivierung. Als Vernetzer-Komponente kommen häufig Polyisocyanate zum Einsatz. Derartige Systeme und Verfahren sind beispielsweise in der EP 0 206 059 A beschrieben.

Nachteilig an diesem Verfahren sind:
- Der Aufwand für das Mischen.
- Nach dem Mischen reagiert das System direkt. Dies führt zu einer limitierten Verarbeitungszeit und kann zusätzlichen Abfall bedeuten, wenn die Mischung nicht innerhalb der begrenzten Verarbeitungszeit verbraucht wird.
- Bei wässrigen Systemen kann man den Ablauf der Verarbeitungszeit teilweise nicht beobachten, da die Viskosität konstant bleibt und das Polyisocyanat mit dem Wasser zu Harnstoffpartikeln abreagiert. Dies kann dazu führen, dass die Wärmebeständigkeit nicht wie geplant angehoben wird.
- Gegenstände, die mit dem gemischten Material in Berührung kommen (z.B. Pinsel) müssen häufig gereinigt und schließlich ausgetauscht werden.
- Die Reaktivität der Abmischungen führt häufig zu Verschmutzungen, insbesondere bei nicht optimalen Verfahrensbedingungen, und Verstopfungen der Auftragsaggregate, insbesondere bei der Verwendung von Walzen, Extrudern oder Sprühköpfen, und damit zu minderwertigen Klebstoffauftragsergebnisse und erhöhtem Reinigungsaufwand.

Es wurde bereits versucht zumindest einen Teil dieser Probleme durch ein Verfahren zu lösen, bei dem die Komponenten im Sprühstrahl vermischt werden. Diese Verfahren sind jedoch in ihrem apparativen Aufbau so komplex, dass sie sich lediglich für den Einsatz im Labormaßstab eignen. Eine großtechnische Etablierung ist kaum bzw. nur mit sehr großem Aufwand und hohen Kosten möglich, da die präzisen Bedingungen, welche benötigt werden, damit die Komponenten sich bereits im Sprühstrahl ausreichend vermischen unter Umgebungsbedingungen und über längere Strecken nicht gewährleistet werden können.

WO 98/15601 A1 offenbart eine Primer-Zusammensetzung umfassend eine Halogen-Donor-Verbindung, eine aliphatische isocyanathaltige Verbindung und ein organisches Lösungsmittel.

US 4,295,910 beschreibt ein Verfahren zum Verbinden eines Polymerfilms mit einem Cellulosesubstrat, umfassend: (A) Beschichten des Substrats mit einem organischen Polyisocyanat mit mindestens zwei aktiven Isocyanatgruppen pro Molekül; (B) Auftragen von Vinylacetat-Ethylen-Copolymer-Emulsionsklebstoff auf das Polyisocyanat, um eine Zwischenlaminat-Klebstoffschicht zu bilden; und (C) Aufbringen eines Vinylpolymerfilms auf die Zwischenlaminat-Klebstoffschicht, wodurch ein dauerhaft verbundenes Laminat gebildet wird.

EP 0 058 300 A1 betrifft ein Klebsystem auf der Basis von Polychloropren, das als Schicht auf die zu klebende Fläche aufgebracht ist, mit einer zusätzlich aufgebrachten reaktionsfähigen Schicht aus einem Polyether-TDI-Prepolymer mit endständigen NCO-Gruppen und einem Vernetzer auf der Basis von aromatischen Diaminen.

Die Aufgabe bestand daher darin, einen Prozess zu entwickeln, mit dessen Hilfe Klebefugen mit der guten Wärmebeständigkeit eines herkömmlichen 2K-Klebstoffs hergestellt werden können, der keine der oben beschriebenen Nachteile aufweist.

Diese Aufgabe wurde erfindungsgemäß gelöst durch ein Verfahren zum Verkleben von Substraten, umfassend folgende Schritte:
I) Zwischen wenigstens zwei Substraten wird wenigstens eine Klebstoff-Komponente (a) und wenigstens eine Isocyanat-Komponente (b) aufgebracht;
II) Die Substrate werden gegeneinander gepresst;
dadurch gekennzeichnet, dass im Schritt I) die Klebstoff-Komponente (a) und die Isocyanat-Komponente (b) separat auf das Substrat appliziert werden;
in Schritt I) auf beide Substrate zuerst die Klebstoff-Komponente (a) und dann zumindest auf einem Substrat auf die Klebstoff-Komponente (a) die Isocyanat-Komponente (b) aufgebracht wird und
die Klebstoff-Komponente (a) und die Isocyanat-Komponente (b) zeitversetzt aufgebracht werden.

Überraschend wurde gefunden, dass es möglich ist, die Komponenten eines 2K-Klebstoffs separat so aufzutragen, dass sich die Komponenten erst nach Verlassen der Applikationsapparatur (z.B. Walze, Extruder, Sprühpistole, Druckkopf, Dispenser) auf dem Substrat treffen, ohne dass dadurch die Klebstofffunktion gegenüber vorgemischten 2K Klebstoffen signifikant beeinträchtigt wird. Völlig unerwartet konnte selbst nach einer vollständigen Trocknung der Klebstoffkomponente (a) eine Isocyanat-Komponente (b) auf die getrocknete Schicht aufgetragen werden, ohne dass dadurch die Klebstofffunktion gegenüber vorgemischten 2K Klebstoffen aus z.B. den selben Komponenten signifikant beeinträchtigt wird. Unter Trocknung versteht man im Sinne dieser Erfindung die Entfernung flüchtiger Bestandteile und/oder die Abkühlung der Klebstoffkomponente unterhalb ihres Erstarrungspunktes (Schmelzpunkt oder Glaspunkt bei Thermoplasten, ggf. nach Kristallisation). Wie auch bei 2K Klebstoffen üblich, werden im Anschluss an den Auftrag der beiden Komponenten die beiden Substarte zusammengepresst (ggf. nach einer Wärmeaktivierung bei wärmeaktivierbaren Klebstoffen). Nach dem erfindungsgemäßen Verfahren erhält man ein verklebtes System dessen Wärmebeständigkeit derjenigen eines zuvor gemischten Systems (Stand der Technik) weitestgehend entspricht.

Separat appliziert bedeutet im Sinne der Erfindung, dass die Klebstoff- und die Isocyanat-Komponente vor und während der Applikation nicht miteinander vermischt werden. Die Komponenten kommen erst auf dem Substrat miteinander in Kontakt, und berühren sich an mindestens einer Grenzfläche.

Als Klebstoff-Komponente (a) kommen alle typischen Klebstoffe in Frage welche bekanntermaßen in 2K Verfahren mit Isocyanaten umgesetzt werden können oder 1 Komponenten (1K) Klebstoffe, die mit Isocyanaten nachvernetzt werden können. Als typische Klebstoffrohstoffe für die Komponente (a) seien genannt: Polyvinylacetate, Acrylate, Polyurethane, Polyester, Polyether, Polycarbonate, Polychloroprene, Perchlorierte Isoprene und Butadiene, in Form von Schmelzen, als wässrige Dispersionen, in organischen Lösungsmitteln verdünnt, sowie als flüssige 100prozentige Systeme sowie deren typische Abmischungen und gebräuchliche Formulierungen. Die genannten Klebstoffe und Formulierungen können als typische Schmelzklebstoffe (Hotmelts), drucksensitive dauerklebrige Klebstoffe (PSA), Kontaktklebstoffe, wärmeaktivierbare Klebstoffe, flüssige Reaktivklebstoffe entweder einseitig oder zweiseitig, je nach der typischen Anwendungsart, appliziert werden. Bevorzugt werden Klebstoff-Komponenten basierend auf Polyurethanen eingesetzt. Besonders bevorzugt handelt es sich bei der Klebstoffkomponente (a) um 2K Klebstoffe.

Polyurethane im Sinne dieser Erfindung umfassen auch Polyurethanharnstoffe, welche sowohl Urethan-, als auch Harnstoffgruppen aufweisen.

Die Klebstoff-Komponente (a) kann als wässrige Dispersion, als Lösung in organischen Lösungsmitteln, oder als flüssiges unverdünntes System vorliegen. Bevorzugt liegt die Klebstoff-Komponente in Form einer wässrigen Dispersion oder einer Lösung vor, besonders bevorzugt handelt es sich um eine Polyurethan basierte wässrige Dispersion oder Lösung. Besonders bevorzugt werden wässrige Klebstoff-Dispersionen, insbesondere solche basierend auf Polyurethanen, eingesetzt.

In einer bevorzugten Ausführungsform der Erfindung werden als Klebstoff-Komponente (a) wärmeaktivierbare Klebstoffe eingesetzt.

Insbesondere bevorzugt handelt es sich um Klebstoffe auf Basis von unverdünnten Polyurethanen, wässrigen Polyurethandispersionen oder Polyurethanlösungen in organischen Lösungsmitteln, ganz besonders bevorzugt um wässrige Polyurethandispersionen oder Polyurethanlösungen in organischen Lösungsmitteln.

Die Klebstoffe enthalten bevorzugt Polyurethane, die Reaktionsprodukte folgender Komponenten sind:
A1) Isocyanate
A2) polymere Polyole mit zahlenmittleren Molgewichten von ≥ 400 g/mol bis ≤ 8000 g/mol bestimmt mittels Gelpermeationschromatographie in Tetrahydrofuran nach DIN 55672-1,
A3) gegebenenfalls Mono- und/oder Polyalkohole oder Mono- und/oder Polyamine oder Aminoalkohole mit Molgewichten von ≤ 400 g/mol,
sowie gegebenenfalls mindestens einer Verbindung ausgewählt aus
A4) Verbindungen, die mindestens eine ionische oder potentiell ionische Gruppe aufweisen und
A5) nichtionisch hydrophilierte Verbindungen.

Eine potentiell ionische Gruppe ist eine Gruppe, die zur Ausbildung einer ionischen Gruppe befähigt ist, zum Beispiel durch Neutralisation.

Besonders bevorzugt sind wässrige Polyurethandispersionen enthaltend Polyurethane (A), die Reaktionsprodukte folgender Komponenten sind:
A1) Isocyanate
A2) polymere Polyole mit zahlenmittleren Molgewichten von ≥ 400 g/mol bis ≤ 8000 g/mol bestimmt mittels Gelpermeationschromatographie in Tetrahydrofuran nach DIN 55672-1,
A3) gegebenenfalls Mono- und/oder Polyalkohole oder Mono- und/oder Polyamine oder Aminoalkohole mit Molgewichten von ≤ 400 g/mol,
sowie mindestens einer Verbindung ausgewählt aus
A4) Verbindungen, die mindestens eine ionische oder potentiell ionische Gruppe aufweisen und
A5) nichtionisch hydrophilierte Verbindungen.

Bevorzugt werden die Polyurethane (A) hergestellt aus ≥ 7 Gewichts-% bis ≤ 45 Gewichts-% A1), ≥ 50 bis ≤ 91 Gewichts-% A2), ≥ 0 bis ≤ 15 Gewichts-% A5), ≥ 0 bis ≤ 12 Gewichts-% ionischer oder potentiell ionischer Verbindungen A4) sowie gegebenenfalls ≥ 0 bis ≤ 30 Gewichts-% von Verbindungen A3), wobei die Summe von A4) und A5) ≥ 0,1 bis ≤ 27 Gewichts-% beträgt und sich die Summe der Komponenten zu 100 Gewichts-% addieren.

Besonders bevorzugt sind die Polyurethane (A) aufgebaut aus ≥ 10 bis ≤ 35 Gewichts-% A1), ≥ 55 bis ≤ 90 Gewichts-% A2), ≥ 0 bis ≤ 10 Gewichts-% A5), ≥ 1 bis ≤ 9 Gewichts-% ionischer oder potentiell ionischer Verbindungen A4) sowie gegebenenfalls ≥ 0 bis ≤ 10 Gewichts-% von Verbindungen A3), wobei die Summe von A4) und A5) ≥ 0,1 bis ≤ 19 Gewichts-% beträgt und sich die Summe der Komponenten zu 100 Gewichts-% addieren.

Ganz besonders bevorzugt werden die Polyurethane (A) hergestellt aus ≥ 15 bis ≤ 35 Gewichts-% A1), ≥ 55 bis ≤ 75 Gewichts-% A2), ≥ 0 bis ≤ 8 Gewichts-% A5), ≥ 1 bis ≤ 5 Gewichts-% ionischer oder potentiell ionischer Verbindungen A4) sowie gegebenenfalls ≥ 0 bis ≤ 8 Gewichts-% von Verbindungen A3), wobei die Summe von A4) und A5) ≥ 0,1 bis ≤ 10 Gewichts-% beträgt und sich die Summe der Komponenten zu 100 Gewichts-% addieren.

Geeignete Isocyanate (A1) sind aromatische, araliphatische, aliphatische oder cycloaliphatische Isocyanate. Es können auch Mischungen solcher Isocyanate eingesetzt werden.

Bevorzugt handelt es sich bei den Isocyanaten um Isocyanate mit mindestens zwei Isocyanatgruppen pro Molekül, welche im Folgenden als Polyisocyanate bezeichnet werden.

Beispiele geeigneter Polyisocyanate sind Butylendiisocyanat (BDI), Pentylendiisocyanat (PDI), Hexamethylendiisocyanat (HDI), Isophorondiisocyanat (IPDI), 1,3-Bis(isocyanatomethyl)benzol (1,3-Xylylendiisocyanat, XDI), 1,4-Bis(isocyanatomethyl)benzol (1,4-Xylylendiisocyanat, XDI), 1,3-Bis(1-isocyanato-1-methyl-ethyl)benzol (TMXDI), 1,4-Bis(1-isocyanato-1-methyl-ethyl)benzol (TMXDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat (TIN), 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Uretdion-, Iminooxadiazindionstruktur und Mischungen derselben, wie sie beispielsweise in J. Prakt. Chem. 336 (1994) S. 185-200 beschrieben sind.. Bevorzugt handelt es sich um Polyisocyanate oder Polyisocyanatgemische der genannten Art mit ausschließlich aliphatisch und/oder cycloaliphatisch gebundenen Isocyanatgruppen.

Besonders bevorzugte Ausgangskomponenten (A1) sind Polyisocyanate beziehungsweise Polyisocyanatgemische auf Basis von PDI, HDI, IPDI und/oder 4,4'-Diisocyanatodicyclohexylmethan, ganz besonders bevorzugt auf Basis von HDI und IPDI. Insbesondere vorteilhaft handelt es sich bei der Komponente A1 um ein Gemisch aus HDI und IPDI.

Geeignete polymere Polyole (A2) verfügen über eine OH-Funktionalität von ≥ 1,5 bis ≤ 4, wie zum Beispiel Polyacrylate, Polyester, Polylactone, Polyether, Polycarbonate, Polyestercarbonate, Polyacetale, Polyolefine und Polysiloxane. Bevorzugt sind Polyole in einem zahlenmittleren Molgewicht von ≥ 400 g/mol bis ≤ 2500 g/mol und einer OH-Funktionalität von ≥ 1,9 bis ≤ 3. Besonders bevorzugte polymere Polyole (A2) sind Polyester, Polycarbonate und/oder Polyether, ganz besonders bevorzugt Polyester.

Das zahlenmittlere Molekulargewicht wird im Rahmen dieser Anmeldung stets bestimmt durch Gelpermeationschromatographie (GPC) in Tetrahydrofuran (THF) bei 23°C. Es wird dabei vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8×300 mm, 5 µm; RID-Detektor). Dabei werden Polystyrolproben bekannter Molmasse zur Kalibrierung verwendet. Die Berechnung des zahlenmittleren Molekulargewichts erfolgt softwaregestützt. Basislinienpunkte und Auswertegrenzen werden entsprechend der DIN 55672 Teil 1 festgelegt.

Die in Frage kommenden Hydroxylgruppen aufweisenden Polycarbonate sind durch Reaktion von Kohlensäurederivaten, zum Beispiel Diphenylcarbonat, Dimethylcarbonat oder Phosgen mit Diolen erhältlich. Als derartige Diole kommen zum Beispiel Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkomponente ≥ 40 Gewichts-% bis ≤ 100 Gewichts-% Hexandiol, bevorzugt 1,6-Hexandiol und/oder Hexandiol-Derivate, bevorzugt solche, die neben endständigen OH-Gruppen Ether- oder Estergruppen aufweisen, zum Beispiel Produkte, die durch Umsetzung von 1 Mol Hexandiol mit mindestens 1 Mol, bevorzugt 1 bis 2 Mol Caprolacton gemäß DE-A 1 770 245 oder durch Veretherung von Hexandiol mit sich selbst zum Di- oder Trihexylenglykol erhalten wurden. Die Herstellung solcher Derivate ist zum Beispiel aus DE-A 1 570 540 bekannt. Auch die in DE-A 3 717 060 beschriebenen Polyether-Polycarbonatdiole können eingesetzt werden.

Die Hydroxylpolycarbonate sollten bevorzugt linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantiol-1,2,6, Butantriol-1,2,4, Trimethylolpropan, Pentaerythrit, Chinit, Mannit, und Sorbit, Methylglykosid, 1,3,4,6-Dianhydrohexite.

Als Polyetherpolyole geeignet sind die in der Polyurethanchemie an sich bekannten Polytetramethylenglykolpolyether, die zum Beispiel über Polymerisation von Tetrahydrofuran durch kationische Ringöffnung hergestellt werden können.

Darüber hinaus geeignete Polyetherpolyole (A2) sind die unter Verwendung von Startermolekülen hergestellten Polyadditionsprodukte des Ethylenoxids, Propylenoxids, Butylenoxids, Styroloxids oder Epichlorhydrins, sowie deren Misch- und Pfropfpolyadditionsprodukte sowie die durch Kondensation von mehrwertigen Alkoholen oder deren Mischungen und die durch Alkoxylierung von Wasser, mehrwertigen Alkoholen, Aminen oder Aminoalkoholen gewonnenen Polyether eingesetzt. Bevorzugt sind Homo- und/oder Mischpolyadditionsverbindungen von Ethylenoxid und/oder Propylenoxid.

Der Anteil an Ethylenoxid in den Homo- und/oder Mischpolyadditionsverbindungen von Ethylenoxid und/oder Propylenoxid beträgt 0 bis 100 Gew.-%, bevorzugt 0 bis 30 Gew.-%, besonders bevorzugt 0 bis 10 Gew.-%.

Polyesterpolyole sind beispielsweise die an sich bekannten Polykondensate aus Di- sowie gegebenenfalls Tri-, und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele hierfür geeigneter Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Bernsteinsäure, Azelainsäure, Sebacinsäure, Glutarsäure, Tetrachlorphthalsäure, Maleinsäure, Fumarsäure, Itaconsäure, Malonsäure, Korksäure, 2 Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols größer als 2 ist, können zusätzlich auch Monocarbonsäuren, wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Bevorzugt sind Polyesterpolyole basierend auf Adipinsäure und 1,4-Butandiol und/oder 1,6-Hexandiol.

Die Komponenten (A3) sind zur Kettenverlängerung und/oder Terminierung des Polyurethan-Prepolymers geeignet. Dazu kommen monofunktionelle Alkohole und Monoamine in Betracht. Bevorzugte Monoalkohole sind aliphatische Monoalkohole mit 1 bis 18 C-Atomen, wie zum Beispiel Ethanol, n-Butanol, Ethylenglykol-monobutylether, 2-Ethylhexanol, 1-Octanol, 1-Dodecanol oder 1-Hexadecanol. Bevorzugte Monoamine sind aliphatische Monoamine, wie zum Beispiel Diethylamin, Dibutylamin, Ethanolamin, N-Methylethanolamin oder N,N-Diethanolamin und Amine der Jeffamin^{®} M-Reihe (Huntsman Corp. Europe, Belgien) oder aminofunktionelle Polyethylenoxide und Polypropylenoxide.

Ebenfalls als Komponente (A3) sind Polyole, Aminopolyole oder Polyamine mit einem Molgewicht unter 400 g/mol geeignet, die in der entsprechenden Literatur in großer Zahl beschrieben sind.

Bevorzugte Komponenten (A3) sind beispielsweise:
a) Alkandiole beziehungsweise -triole, wie Ethandiol, 1,2- und 1,3-Propandiol, 1,4- und 2,3-Butandiol, 1,5-Pentandiol, 1,3-Dimethylpropandiol, 1,6-Hexandiol, Neopentylglykol, 1,4-Cyclohexandimethanol, 2-Methyl-1,3-propandiol, 2-Ethyl-2-butylpropandiol, Trimethylpentandiol, stellungsisomere Diethyloctandiole, 1,2- und 1,4-Cyclohexandiol, hydriertes Bisphenol A [2,2-Bis(4-hydroxycyclohexyl)-propan], 2,2-Dimethyl-3-hydroxypropionsäure-(2,2-dimethyl-3-hydroxypropylester), Trimethylolethan, Trimethylolpropan oder Glycerin,
b) Etherdiole, wie Diethylendiglykol, Triethylenglykol, Tetraethylenglykol, Dipropylenglykol, Tripropylenglykol, 1,3-Butylenglykol oder Hydrochinondihydroxyethylether,
c) Esterdiole der allgemeinen Formeln (I) und (II),

   HO-(CH₂)ₓ-CO-O-(CH₂)_{y}-OH (I)

   HO-(CH₂)ₓ-O-CO-R-CO-O(CH₂)ₓ OH (II)

   in welchen
   R ein Alkylen- oder Arylenrest mit 1 bis 10 C-Atomen, bevorzugt 2 bis 6 C-Atomen,
   x 2 bis 6 und
   y 3 bis 5 ist,
   wie zum Beispiel δ-Hydroxybutyl-ε-hydroxy-capronsäureester, ω-Hydroxyhexyl-γ-hydroxybuttersäureester, Adipinsäure-(β-hydroxyethyl)ester und Terephthalsäurebis(β-hydroxy-ethyl)ester und
d) Di- und Polyamine wie zum Beispiel 1,2-Diaminoethan, 1,3 Diaminopropan, 1,6-Diaminohexan, 1,3- und 1,4-Phenylendiamin, 4,4'-Diphenylmethandiamin, Isophorondiamin,

Isomerengemisch von 2,2,4- und 2,4,4-Trimethylhexa-methylendiamin, 2-Methylpentamethylendiamin, Diethylentriamin, 1,3- und 1,4-Xylylendiamin, α,α,α,α'-Tetramethyl-1,3- und -1,4-xylylendiamin, 4,4-Diaminodicyclohexylmethan, aminofunktionelle Polyethylenoxide oder Polypropylenoxide, die unter dem Namen Jeffamin , D-Reihe (Fa. Huntsman Corp. Europe, Belgien) erhältlich sind, Diethylentriamin und Triethylentetramin. Als Diamine im Sinne der Erfindung sind auch Hydrazin, Hydrazinhydrat und substituierte Hydrazine geeignet, wie zum Beispiel N-Methylhydrazin, N,N'-Dimethylhydrazin und deren Homologe sowie Säuredihydrazide, Adipinsäure, β-Methyladipinsäure, Sebacinsäure, Hydracrylsäure und Terephthalsäure, Semicarbazido-alkylenhydrazide, wie zum Beispiel β-Semicarbazidopropionsäurehydrazid (zum Beispiel beschrieben in DE-A 1 770 591), Semicarbazidoalkylen-carbazinester, wie zum Beispiel 2-Semicarbazidoethylcarbazinester (zum Beispiel beschrieben in DE-A 1 918 504) oder auch Aminosemicarbazid-Verbindungen, wie zum Beispiel β-Aminoethylsemicarbazido-carbonat (zum Beispiel beschrieben in DE-A 1 902 931).

Die Komponente (A4) enthält ionische Gruppen, die entweder kationischer oder anionischer Natur sein können. Kationisch, anionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen (A4) sind zum Beispiel Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, 1,2- oder 1,3-Propylendiamin-β-ethylsulfonsäure, Ethylendiamin-propyl- oder -butylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO3, zum Beispiel beschrieben in DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure. Ganz besonders bevorzugt sind die Natriumsalze von N-(2-Aminoethyl)-β-alanin und 2-(2-Amino-ethylamino-)-ethansulfonsäure. Ebenfalls ganz besonders bevorzugt ist Dimethylpropionsäure. In einer vorteilhaften Ausführungsform werden sowohl Natriumsalze von N-(2-Aminoethyl)-β-alanin oder 2-(2-Amino-ethylamino-) -ethansulfonsäure, als auch Dimethylpropionsäure eingesetzt.

Geeignete nichtionisch hydrophilierend wirkende Verbindungen (A5) sind zum Beispiel Polyoxyalkylenether, die mindestens eine Hydroxy- oder Aminogruppe enthalten. Diese Polyether enthalten einen Anteil von 30 Gewichts-% bis 100 Gewichts-% an Bausteinen, die vom Ethylenoxid abgeleitet sind. In Frage kommen linear aufgebaute Polyether einer Funktionalität zwischen 1 und 3, aber auch Verbindungen der allgemeinen Formel (III), 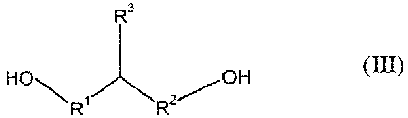 in welcher
R¹ und R² unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und R³ für einen alkoxyterminierten Polyethylenoxidrest steht.

Nichtionisch hydrophilierend wirkende Verbindungen sind beispielsweise auch einwertige, im statistischen Mittel ≥ 5 bis ≤ 70, bevorzugt ≥ 7 bis ≤ 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (zum Beispiel in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Zur Herstellung des Polyurethans (A) kann eine Kombination aus ionischen (A4) und nichtionischen (A5) Hydrophilierungsmitteln verwendet werden. Bevorzugt werden ionische Hydrophilierungsmittel verwendet.

In einer besonders bevorzugten Ausführungsform des erfindungsgemäßen Verfahrens umfasst der Klebstoff eine wässrige Polyurethandispersion enthaltend ein Polyurethan (A), das das Reaktionsprodukt ist aus einer Mischung HDI und IPDI (A1), einem Polyesterpolyol, insbesondere einem Polyesterpolyol aus Adipinsäure und 1,4-Butandiol und/oder 1,6-Hexandiol (A2), gegebenenfalls einem Diol und/oder Diamin (A3) und dem Natriumsalz der 2-(2-Amino-ethylamino-)ethansulfonsäure und/oder Dimethylolpropionsäure (A4).

Die Herstellung des Polyurethans (A) kann in einer oder mehreren Stufen in homogener, oder bei mehrstufiger Umsetzung, teilweise in disperser Phase durchgeführt werden. Nach vollständig oder teilweise durchgeführter Polyaddition erfolgt ein Dispergier-, Emulgier- oder Lösungsschritt. Im Anschluss erfolgt gegebenenfalls eine weitere Polyaddition oder Modifikation in disperser Phase.

Zur Herstellung des Polyurethans (A) können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671-1682). Bevorzugt ist das Schmelz-Emulgier-, Präpolymer-Misch- und das Aceton-Verfahren. Besonders bevorzugt ist das Aceton-Verfahren.

Üblicherweise werden die Bestandteile (A2) bis (A5), die keine primären oder sekundären Aminogruppen aufweisen, und ein Polyisocyanat (A1) zur Herstellung eines Polyurethan-Präpolymers im Reaktor ganz oder teilweise vorgelegt und gegebenenfalls mit einem mit Wasser mischbaren aber gegenüber Isocyanatgruppen inerten Lösungsmittel verdünnt, bevorzugt aber ohne Lösungsmittel, auf höhere Temperaturen, bevorzugt im Bereich von 50 bis 120 °C, aufgeheizt.

Geeignete Lösungsmittel sind zum Beispiel Aceton, Butanon, Tetrahydrofuran, Dioxan, Acetonitril, Dipropylenglykoldimethylether und 1-Methyl-2-pyrrolidon, die nicht nur zu Beginn der Herstellung, sondern gegebenenfalls in Teilen auch später zugegeben werden können. Bevorzugt sind Aceton und Butanon. Es ist möglich, die Reaktion unter Normaldruck oder erhöhtem Druck, zum Beispiel oberhalb der Normaldruck-Siedetemperatur eines Lösungsmittels wie zum Beispiel Aceton durchzuführen.

Weiterhin können die zur Beschleunigung der Isocyanatadditionsreaktion bekannten Katalysatoren, wie zum Beispiel Triethylamin, 1,4-Diazabicyclo-[2,2,2]-octan, Dibutylzinnoxid, Zinndioktoat, Dibutylzinndilaurat, Zinn-bis-(2-ethylhexanoat), Zinkdioktoat, Zink-bis-(2-ethylhexanoat) oder andere metallorganischen Verbindungen mit vorgelegt oder später zudosiert werden.

Bevorzugt sind Dibutylzinndilaurat, Zinkdioktoat und Zink-bis-(2-ethylhexanoat), besonders bevorzugt ist Zink-bis-(2-ethylhexanoat).

Anschließend werden die gegebenenfalls zu Beginn der Reaktion noch nicht zugegebenen Bestandteile (A1), (A2), gegebenenfalls (A3) und (A4) und/oder (A5), die keine primären oder sekundären Aminogruppen aufweisen, zudosiert und ebenfalls auf höhere Temperaturen, bevorzugt im Bereich von 50 bis 120 °C, aufgeheizt.. Bei der Herstellung des Polyurethan-Präpolymeren beträgt das Stoffmengenverhältnis von Isocyanatgruppen zu mit Isocyanat reaktiven Gruppen ≥ 0,90 bis ≤ 3, bevorzugt ≥ 0,95 bis ≤ 2,5, besonders bevorzugt ≥ 1,05 bis ≤ 2,0. Die Umsetzung der Komponenten (A1) bis (A5) erfolgt bezogen auf die Gesamtmenge an mit Isocyanaten reaktiven Gruppen des Teils von (A2) bis (A5), der keine primären oder sekundären Aminogruppen aufweist, teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, zum Beispiel Infrarot- oder Nahinfrarot-Spektren, Bestimmungen des Brechungsindex als auch chemische Analysen, wie Titrationen, von entnommenen Proben vorgenommen werden. Es werden Polyurethan-Präpolymere, die freie Isocyanatgruppen enthalten, in Substanz oder in Lösung erhalten.

Nach oder während der Herstellung der Polyurethan-Präpolymere aus (A1) und (A2) bis (A5) erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder Ammoniumhydrogencarbonat, Trimethylamin, Triethylamin, Tributylamin, Diisopropylethylamin, Dimethylethanolamin, Diethylethanolamin, Triethanolamin, Kaliumhydroxid oder Natriumcarbonat eingesetzt, bevorzugt Triethylamin, Triethanolamin, Dimethylethanolamin oder Diisopropylethylamin. Die Stoffmenge der Basen liegt zwischen 50 und 120%, bevorzugt zwischen 50 und 100% und besonders bevorzugt zwischen 60 und 90% der Stoffmenge der anionischen Gruppen. Im Falle kationischer Gruppen werden organische oder anorganische Säuren eingesetzt. Werden nur nichtionisch hydrophilierte Verbindungen (A5) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Mögliche aminische Komponenten sind (A2), (A3) und (A4) mit denen gegebenenfalls noch verbliebenen Isocyanatgruppen umgesetzt werden können. Diese Kettenverlängerung kann dabei entweder in Lösungsmittel vor dem Dispergieren, während des Dispergierens oder in Wasser nach dem Dispergieren durchgeführt werden. Werden als (A4) aminische Komponenten eingesetzt, erfolgt die Kettenverlängerung bevorzugt vor der Dispergierung.

Die aminische Komponente (A3) oder (A4) kann mit organischen Lösungsmitteln und/oder mit Wasser verdünnt dem Reaktionsgemisch zugegeben werden. Bevorzugt werden > 70 Gewichts-% bis ≤ 95 Gewichts-% Lösungsmittel und/oder Wasser eingesetzt. Sind mehrere aminische Komponenten vorhanden, so kann die Umsetzung nacheinander in beliebiger Reihenfolge oder gleichzeitig durch Zugabe einer Mischung erfolgen.

Zur Herstellung der Polyurethan-Dispersion werden die Polyurethan-Präpolymere, gegebenenfalls unter starker Scherung, wie zum Beispiel starkem Rühren oder unter Verwendung eines Düsenstrahldispergators, entweder in das Dispergierwasser eingetragen oder man rührt umgekehrt das Dispergierwasser zu den Präpolymeren. Anschließend kann dann, falls noch nicht in der homogenen Phase geschehen, die Molmassenerhöhung durch Reaktion von gegebenenfalls vorhandenen Isocyanatgruppen mit der Komponente (A2), (A3) erfolgen. Die eingesetzte Menge an Polyamin (A2), (A3) hängt von den noch vorhandenen, nicht umgesetzten Isocyanatgruppen ab. Bevorzugt werden ≥ 45 bis ≤ 100 %, besonders bevorzugt ≥ 50 bis ≤ 75% der Stoffmenge der Isocyanatgruppen mit Polyaminen (A2), (A3) umgesetzt.

Gegebenenfalls kann das organische Lösungsmittel abdestilliert werden. Die Dispersionen haben einen Festkörpergehalt von ≥ 10 bis ≤ 70 Gewichts-%, bevorzugt ≥ 25 bis ≤ 65 Gewichts-% und besonders bevorzugt ≥ 30 bis ≤ 60 Gewichts-%.

Die Polyurethandispersionen können alleine oder mit bekannten Bindemitteln, Hilfsstoffen und Zugschlagstoffen, insbesondere Lichtschutzmitteln wie UV-Absorbern und sterisch gehinderten Aminen (HALS), weiterhin Antioxidantien, Füllstoffen sowie Lackhilfsmitteln, zum Beispiel Antiabsetzmittel, Entschäumungs- und/oder Netzmitteln, Verlaufmitteln, Reaktiv-Verdünnern, Weichmachern, Katalysatoren, Hilfslösemitteln und/oder Verdickern und Additiven, wie beispielsweise Dispersionen, Pigmenten, Farbstoffen oder Mattierungsmitteln, eingesetzt werden. Insbesondere sind Kombinationen mit Polyurethandispersionen oder Polyacrylatdispersionen, die gegebenenfalls auch hydroxyfunktionell seien können, problemlos möglich. Die Additive können den PUR-Dispersionen unmittelbar vor der Verarbeitung zugegeben werden. Es ist aber auch möglich, zumindest einen Teil der Additive vor oder während der Dispergierung des Bindemittels beziehungsweise Bindemittel-/Vernetzergemisches zuzugeben. In einer möglichen Ausführungsform der Erfindung kann die Klebstoffkomponente (a) auch schon andere vernetzungsaktive Substanzen enthalten, wie zum Beispiel Carbodiimide, Aziridine oder Peroxide, die in einem unabhängigen Prozess zur Co-Vernetzung der Klebstoffkomponente (a) führen können. Die Auswahl und die Dosierung dieser Stoffe, die den Einzelkomponenten und/oder der Gesamtmischung zugegeben werden können, sind dem Fachmann bekannt.

Insbesondere bevorzugt werden als Klebstoff-Komponente (a) wärmeaktivierbare, wässrige Polyurethandispersionen eingesetzt.

Bei der Isocyanat-Komponente (b) handelt es sich um beliebige organische Isocyanate mit aliphatisch, cycloaliphatisch, araliphatisch und/oder aromatisch gebundenen, freien Isocyanatgruppen, die bei Raumtemperatur flüssig sind oder zu diesem Zweck mit Lösungsmitteln verdünnt sind. Die Isocyanat-Komponente (b) ist bevorzugt niedrigviskos, sie weist bevorzugt bei 23°C eine Viskosität von 5 bis 15000, vorzugsweise 10 bis 5000 mPas und besonders bevorzugt von 100 bis 2000 mPas auf.

Sämtliche Viskositätsmessungen erfolgten mit einem Physica MCR 51 Rheometer der Fa. Anton Paar Germany GmbH (DE) nach DIN EN ISO 3219.

Bevorzugt handelt es sich bei der Isocyanat-Komponente (b) um Isocyanate, die zwei oder mehr Isocyanatgruppen aufweisen oder deren Gemische, im Folgenden Polyisocyanate genannt. Besonders bevorzugt handelt es sich bei den Polyisocyanaten um Verbindungen mit einer zwischen 1,5und 5,0 liegenden (mittleren) NCO-Funktionalität, besonders bevorzugt von 2,0 bis 4,0. Weiterhin bevorzugt handelt es sich um Polyisocyanate mit ausschließlich aliphatisch und/oder cycloaliphatisch gebundenen Isocyanatgruppen.

Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind.

Als Verbindungen mit aliphatisch oder cycloaliphatisch gebundenen Isocyanatgruppen können sowohl monomere, Isocyanat-Gruppen enthaltende Verbindungen als auch polymere Modifizierungen dieser monomeren Verbindungen, sowie deren Mischungen verwendet werden.

Geeignete monomere Verbindungen mit aliphatisch gebundenen Isocyanat-Gruppen sind beliebige durch Phosgenierung oder nach phosgenfreien Verfahren, beispielsweise durch thermische Urethanspaltung, zugängliche aliphatische Polyisocyanate. Bevorzugte Polyisocyanate sind solche des Molekulargewichtsbereichs 140 bis 336 g/mol, wie z.B. die linearaliphatischen Diisocyanate 1,4-Diisocyanatobutan (BDI), 1,5-Pentandiisocyanat (PDI), 1,6-Diisocyanatohexan (HDI), 1,3-Bis(isocyanatomethyl)benzol (1,3-Xylylendiisocyanat, XDI), 1,4-Bis(isocyanatomethyl)benzol (1,4-Xylylendiisocyanat, XDI), 1,3-Bis(1-isocyanato-1-methyl-ethyl)benzol (TMXDI), 1,4-Bis(1-isocyanato-1-methyl-ethyl)benzol (TMXDI), 4-Isocyanatomethyl-l,8-octandiisocyanat (Trisisocyanatononan (TIN)), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan sowie die cycloaliphatischen Diisocyanate 1,3- bzw. 1,4-Diisocyanatocyclohexan, 1,4-Diisocyanato-3,3,5-trimethylcyclohexan, 1,3-Diisocyanato-2(4)-methylcyclohexan, 1-Isocyanato-3,3,5-trimethyl-5-isocyanatomethylcyclohexan (Isophorondiisocyanat, IPDI), 1-Isocyanato-1-methyl-4(3)isocyanato-methylcyclohexan, 1,8-Diisocyanato-p-menthan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetramethyl-1,1'-bi(cyclohexyl), 4,4'- und/oder 2,4'-Diisocyanatodicyclohexylmethan, 4,4'-Diisocyanato-3,3'-dimethyldicyclohexylmethan, 4,4'-Diisocyanato-3,3',5,5'-tetramethyldicyclohexylmethan, 1,3-Diisocyanatoadamantan, und 1,3-Dimethyl-5,7-diisocyanatoadamantan oder beliebige Gemische solcher Polyisocyanate.

Bei den Polyisocyanaten handelt es sich vorteilhaft um beliebige, durch Modifizierung aliphatischer Polyisocyanate hergestellte aus mindestens zwei monomeren Verbindungen mit aliphatisch gebundenen Isocyanat-Gruppen aufgebaute Polyisocyanate mit Uretdion-, Isocyanurat-, Allophanat-, Biuret-, Iminooxadiazindion- und/oder Oxadiazintrionstruktur. Derartige Modifizierungen werden beispielsweise in J. Prakt. Chem. 336 (1994) 185 - 200, in DE-A 1 670 666, EP-A 0 798 299 und EP-A 0 649 866 beschrieben. Ebenfalls geeignet sind estergruppenhaltige Polyisocyanate, wie sie beispielsweide in der EP0412380 beschrieben sind. Als monomere Ausgangsverbindungen zur Herstellung der Modifizierungen kommen alle oben genannten monomeren Polyisocyanate, sowie deren Gemische in Frage.

Bevorzugt werden im Rahmen dieser Erfindung als Komponente (b) HDI, IPDI, 1,3-Diisocyanato-2(4)-methylcyclohexan, 4,4'- und/oder 2,4'-Diisocyanatodicyclohexylmethan oder deren Modifizierungen mit Uretdion-, Isocyanurat-, Allophanat-, Biuret- und/oder Iminooxadiazindionstruktur, sowie Gemische der genannten Verbindungen eingesetzt.

Besonders bevorzugt enthält die Isocyanat-Komponente (b) HDI oder Modifikationen von HDI, die Uretdion-, Isocyanurat-, Allophanat-, Biuret- und/oder Iminooxadiazindionstruktur aufweisen, oder besteht daraus. Ganz besonders enthält die Isocyanat-Komponente (b) Modifikationen von HDI, die Uretdion-, Isocyanurat-, Allophanat-, Biuret- und/oder Iminooxadiazindionstruktur aufweisen, oder besteht daraus.

Die Summe der in der Isocyanat-Komponente enthaltenden Verbindungen mit Isocyanat-Gruppen weisen in der Regel eine zahlenmittlere NCO-Funktionalität von ≥ 1,5, bevorzugt ≥ 2, besonders bevorzugt ≥ 2,5 und ganz besonders bevorzugt ≥ 3,0 auf.

Die Isocyanat-Komponente (b) kann ggf. hydrophil modifiziert sein. Wasserlösliche bzw. - dispergierbare Polyisocyanate sind z.B. durch Modifikation mit Carboxylat-, Sulfonat- und/oder Polyethylenoxidgruppen und/oder Polyethylenoxid/- Polypropylenoxidgruppen erhältlich.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielweise in der EP-A 0 540 985, S. 3, Z 55 - S. 4 Z. 5 beschrieben. Gut geeignet sind auch die in der EP-A- 0 959 087, S. 3 Z. 39-51 beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 10 007 821, S. 2 Z. 66 - S. 3 Z. 5, beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE 10 024 624, S. 3 Z. 13 - 33 oder auch in der WO 01/88006 beschrieben sind. Ebenso möglich ist die externe Hydrophilierung durch Zusatz von Emulgatoren.

Der NCO-Gehalt der verwendeten Polyisocyanatkomponente (b) kann z.B. bei sogenannten Polyether-Allophanaten (Hydrophilierung mittels eines Polyethers) von 5 - 25Gew.-% reichen. Bei einer Hydrophilierung mit Sulfonsäuregruppen können NCO-Gehalte von 4 - 26 Gew.-% erreicht werden, wobei diese Zahlen nur beispielhaft zu verstehen sind.

Die eingesetzten Isocyanatkomponenten können auch teilweise, z.B. bis zu einem Drittel der vorhandenen Isocyanatgruppen mit gegenüber Isocyanaten reaktiven Komponenten blockiert sein. In diesem Fall kann es in einem späteren Schritt zu Reaktion der blockierten Isocyanatkomponente mit weiterem Polyol kommen, um eine weitere Vernetzung herbeizuführen.

Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε- Caprolactam, Phenole, Amine wie Diisopropylamin oder Dibutylamin, Dimethylpyrazol oder Triazol sowie Malonsäuredimethylester, Malonsäurediethylester oder Malonsäuredibutylester.

Bevorzugt ist der Einsatz niedrigviskoser, hydrophober oder hydrophilierter Polyisocyanate mit freien Isocyanatgruppen auf Basis aliphatischer, cycloaliphatischer, araliphatischer und/oder aromatischer Isocyanate, besonders bevorzugt aliphatischer oder cycloaliphatischer Isocyanate.

Das erfindungsgemäße Verfahren wird bevorzugt wie folgt durchgeführt:
Zwischen wenigstens zwei Substraten wird wenigstens eine Klebstoff-Komponente (a) und wenigstens eine Isocyanat-Komponente (b) aufgebracht (Schritt I) und anschließend werden die beschichteten Substrate mit der oder den beschichteten Seiten, ggf. nach Aktivierung der Klebstoff-Komponente durch Wärmeeinwirkung, gegeneinander gepresst (Schritt II). Eine Wärmeaktivierung von Klebstoffen kann nur dann nötig werden, wenn die Klebstoffkomponente bei Raumtemperatur nicht klebrig ist. Durch Wärmeaktivierung kann z.B. ein Schmelzen oder auch eine Dekristallisation herbeigeführt werden oder generell die Viskosität einer Klebstoffkomponente soweit abgesenkt werden, dass unter Druckeinwirkung ein Benetzen und Verbinden der zu verklebenden Komponenten erfolgen kann. Die dafür typischen geeigneten Viskositäten sind dem Fachmann gut bekannt (zum Beispiel aus Classification of PSAs by the viscoelastic window, the so called Chang window, proposed by E.P.Chang, J. Adhes. 34, 189 (1991*)*).

Die erfindungsgemäße Applikation von der Klebstoff-Komponente und der Isocyanat-Komponente zeichnet sich dadurch aus, dass die beiden Komponenten nicht, wie im Stand der Technik üblich, vor oder während der Applikation miteinander vermischt sondern dass diese separat voneinander appliziert werden. Die Komponenten kommen dabei erst auf dem Substrat in Kontakt miteinander.

Liegt die Klebstoff-Komponente (b) in Form einer Lösung oder Dispersion vor, so muss aus dieser vor Schritt II) das Lösungsmittel oder das Dispergiermedium entfernt und diese somit getrocknet werden. In einer besonders bevorzugten Ausführungsform wird die Isocyanat-Komponente separat und nachträglich auf die schon applizierte, bereits getrocknete und ggf. kristallisierte Klebstoff-Komponente appliziert. Getrocknet bedeutet dabei zumindest angetrocknet, bevorzugt aber vollständig getrocknet.

Dies hat den Vorteil, dass z.B. bei wärmeaktivierbaren Klebstoffen der Auftrag der Klebstoffschicht sowie deren vollständige Trocknung komplett von der Applikation der Isocyanat-Komponente zeitlich wie räumlich getrennt sein kann. Eine Einlagerung eines mit der Klebstoff-Komponente beschichteten Substrats ist somit möglich.

Da sich die getrocknet Klebstoffkomponente (a) analog zu einem 1K Hotmelt oder getrocknetem 1K Lösungsmittelklebstoff verhält ist diese Verfahrensweise für eine Vielzahl geeigneter vorapplizierter 1K Klebstoffe, die prinzipiell auch mit Isocyanaten covernetzbar sind, geeignet.

Bevorzugt handelt es sich bei der Klebstoff-Komponente (a) um einen wärmeaktivierbaren Klebstoff, welcher nach der Applikation getrocknet und wärmeaktiviert wird. Die Verklebung erfolgt nach der Applikation der Isocyanat-Komponente (b) durch das Verpressen unter Druck der beiden Substrate im wärmeaktivierten Zustand des Klebstoffs.

In einer vorteilhaften Ausführungsform des erfindungsgemäßen Verfahrens wird daher vor Schritt II) die Klebstoff-Komponente (b) wärmeaktiviert.

Bei wärmeaktivierbaren Klebstoffen kann die Aktivierung der Klebstoffschicht kurz vor der Applikation der Isocyanat-Komponente erfolgen oder aber die Isocyanat-Komponente wird vor der Wärmeaktivierung aufgetragen und anschließend das gesamte System wärmeaktiviert.

In einer bevorzugten Ausführungsform wird die Klebstoffkomponente auf beide zur verbindenden Substrate appliziert.

Erfindungsgemäß wird in Schritt I) auf beide Substrate zuerst die Klebstoff-Komponente und dann zumindest auf einem Substrat auf die Klebstoff-Komponente die Isocyanat-Komponente aufgebracht. Danach können die Substrate unter Druck verpresst werden. Die Isocyanat-Komponente (b) wird bevorzugt mindestens auf einen Teil der Klebstoff-Komponente (a) aufgebracht. Bevorzugt wird die Isocyanat-Komponente (b) auf mindestens 5 %, oder bevorzugt auf mindestens 10 %, oder bevorzugt auf mindestens 20 % der Oberfläche der Klebstoff-Komponente (a) aufgebracht, die nicht mit dem Substrat in Kontakt steht. Die Isocyanat-Komponente kann entweder direkt nach der Trocknung der Klebstoff-Komponente (a) oder aber erst nach Minuten, Stunden, Tagen, Wochen, Monaten oder sogar Jahren nach der Trocknung aufgetragen werden. Bevorzugt wird die Isocyanat-Komponente auf die noch nasse Klebstoff-Komponente (a) aufgebracht.

Die Klebstoff-Komponente (a) kann, bevorzugt aus Dispersion oder Lösung, als Schicht aufgebracht werden. Bevorzugt weist die Schicht nach Trocknung eine Dicke von 0,1 bis 2000 µm, weiter bevorzugt von 1 bis 300 µm und besonders bevorzugt von 5 bis 200 µm auf. Es können auch mehrere Schichten aufgebracht werden. Dabei kann die Isocyanat-Komponente auf eine oder mehrere der Schichten aufgetragen werden.

In einer bevorzugten Ausführungsform des erfindungsgemäßen Verfahrens wird die Isocyanat-Komponente (b) in Teilbereichen auf die Klebstoff-Komponente (a) aufgebracht.

Auf 100 Gewichtsteile der Klebstoff-Komponente (a) (Feststoffgehalt) werden bevorzugt ≥ 0,5 und ≤ 30 Gewichtsteile der Isocyanat-Komponente (b) (Feststoffgehalt), oder bevorzugt ≥ 1 und ≤ 15 Gewichtsteile der Isocyanat-Komponente (b), oder bevorzugt ≥ 1,5 und ≤ 10 Gewichtsteile der Isocyanat-Komponente (b) eingesetzt.

In einer bevorzugten Ausführungsform des erfindungsgemäßen Verfahrens werden auf 100 Gewichtsteile der Klebstoff-Komponente (a) (Feststoffgehalt) > 0,1 und ≤ 30 Gewichtsteile der Isocyanat-Komponente (b) (Feststoffgehalt), weiterhin bevorzugt ≥ 0,2 und ≤ 25 Gewichtsteile der Isocyanat-Komponente (b), oder bevorzugt ≥ 0,5 und ≤ 20 Gewichtsteile der Isocyanat-Komponente (b), oder bevorzugt ≥ 1,0 und ≤ 15 Gewichtsteile der Isocyanat-Komponente (b) eingesetzt.

Die Klebstoff-Komponente (a) und die Isocyanat-Komponente (b) können gleich oder unterschiedlich aufgetragen werden. Als Auftragsmethode kommen alle gängigen Auftragsmethoden für flüssige Materialen in Frage. Beispielhaft seien hier genannt: Sprühen, Rakeln, Pinseln, Rollen, Fluten, Walzen, Extrudieren, Dispensen und Drucken.

Vorteilhaft wird zumindest die Isocyanat-Komponente (b) gedruckt. So kann diese ortsgenau und zielgerichtet in beliebigen Mustern auf die Klebstoff-Komponente aufgebracht werden.

Zur Verklebung der Substrate werden diese bevorzugt für eine Dauer von 0,1 bis 600 Sekunden bei einer Temperatur von -20 bis 180 °C mit einem Druck von 0,05 bis 50 bar, besonders bevorzugt für eine Dauer von 1 bis 120 Sekunden bei einer Temperatur von 10 bis 150 °C mit einem Druck von 0,1 bis 20 bar und ganz besonders bevorzugt für eine Dauer von 2 bis 60 Sekunden bei einer Temperatur von 20 bis 120 °C mit einem Druck von 0,5 bis 10 bar gegeneinander gepresst.

Das erfindungsgemäße Verfahren eignet sich zum Verkleben beliebiger Substrate. Beispielsweise geeignet sind Papier, Pappe, Holz, Metall, Leder, synthetisches Leder, Gummimaterialien, beliebige Kunststoffe, wie unter anderem Polyurethan basierte Kunststoffe und deren Schäume, sowie Homo- oder Mischpolymerisate von Vinylchlorid. Es kann sich bei dem Substrat auch um Textilien oder Folienmaterialien handeln.

Das erfindungsgemäße Verfahren eignet sich zum Beispiel um Teile eines Schuhs, eines textilen Verbundes, eines Möbelstücks, einer Folienbeschichtung und / oder einer Fahrzeuginnenraumverkleidung durch Verklebung herzustellen.

Die nach dem erfindungsmäßen Verfahren hergestellten Verklebungen haben bevorzugt einen Softening Point von ≥ 65°C, oder bevorzugt von ≥ 85°C und ganz besonders bevorzugt von ≥ 100 °C.

Die nach dem erfindungsmäßen Verfahren hergestellten Verklebungen haben bevorzugt einen Softening Point der > 3°C, oder bevorzugt > 5 °C oder bevorzugt > 10 °C, oder bevorzugt > 15 °C höher ist als der Softening Point einer Verklebung basierend auf der Klebstoffkomponente a).

Ein weiterer Gegenstand der vorliegenden Offenbarung ist ein Verbund erhältlich nach dem erfindungsgemäßen Verfahren.

Die bei der Verklebung von zwei Substraten offenbarungsgemäß entstehenden Verbunde zeichnen sich dadurch aus, dass die Klebstoffschicht zwischen den Substraten zumindest abschnittsweise mit einem Polyharnstoff und/oder Polyurethanpolyharnstoff enthaltenden Netzwerk unterschiedlicher Dichte durchsetzt ist.

Dadurch unterscheiden sich die Verbunde erheblich von den nach den im Stand der Technik bekannten Verfahren erhältlichen Verbunden. Diese weisen durch die Vorvermischung der Komponenten ein homogenes Polyharnstoff und/oder Polyurethanpolyharnstoff enthaltendes Netzwerk über die gesamte Klebstoffschicht auf.

Die Konzentration an Urethangruppen und/oder Harnstoffgruppen ist in den Kontaktbereichen von Komponente a) und Komponente b) um mindestens 5 Gew.-%, bevorzugt um mindestens 7 Gew.-%, oder bevorzugt um mindestens 10 Gew.-% höher als im restlichen Verbundmaterial. Unter Kontaktbereich wird gemäß der Erfindung ein Bereich von maximal 5 Mikrometer, bevorzugt maximal 1 Mikrometer, oder bevorzugt maximal 0,5 Mikrometer entlang der Kontaktfläche von Komponente a) und Komponente b) verstanden. Bei einer Sandwichstruktur bei der mehrere Schichten von Komponente a) und Komponente b) aufeinander aufgetragen werden, wird es entsprechend mehrere Kontaktbereiche geben.

Ein weiterer Gegenstand der vorliegenden Offenbarung ist daher ein Verbund umfassend wenigstens zwei Substrate, die durch eine zwischen den Substraten angeordnete Klebstoffschicht verbunden sind, dadurch gekennzeichnet, dass die Klebstoffschicht zumindest abschnittsweise mit einem Polyisocyanurat und/oder Polyharnstoff und/oder Polyurethan-Netzwerk unterschiedlicher Dichte durchsetzt ist.

Hinsichtlich der Beschaffenheit der Klebstoffschicht gelten die oben für die Klebstoff Komponente (a) angegebenen Details und vorteilhaften Ausführungsformen.

Das Polyisocyanat und/oder Polyharnstoff und/oder Polyurethan-Netzwerk entsteht bevorzugt durch die Umsetzung der Klebstoffkomponente mit der Isocyanat-Komponente (b), für welche ebenfalls die oben genannten Details und vorteilhaften Ausführungsformen analog gelten.

Bevorzugt ist der offenbarte Verbund dadurch gekennzeichnet, dass die Klebstoffschicht auf einer Klebstoff-Komponente basiert, die wärmeaktivierbar ist.

Weiterhin bevorzugt ist der offenbarte Verbund dadurch gekennzeichnet, dass die Klebstoffschicht auf einer Klebstoff-Komponente basiert, die einer wässrigen Polyurethandispersion ist.

Die Klebstoffschicht des offenbarten Verbunds weist bevorzugt einen Softening Point von ≥ 65°C, oder bevorzugt von ≥ 85°C und ganz besonders bevorzugt von ≥ 100 °C auf.

Die Klebeschicht des offenbarten Verbunds weist bevorzugt einen Softening Point auf, der > 3°C, oder bevorzugt > 5 °C oder bevorzugt > 10 °C, oder bevorzugt > 15 °C höher ist als der Softening Point einer Klebeschicht basierend auf einer Klebeschicht bestehend aus Klebstoffkomponente a).Als Substrate geeignet sind beispielsweise Papier, Pappe, Holz, Metall, Leder, synthetisches Leder, Gummimaterialien, beliebige Kunststoffe, wie unter anderem Polyurethan basierte Kunststoffe und deren Schäume, sowie Homo- oder Mischpolymerisate von Vinylchlorid. Es kann sich bei dem Substrat auch um Textil- und/oder Folienmaterialien handeln.

Bei dem offenbarten Verbund handelt es sich zum Beispiel um Teile eines Schuhs, eines textilen Verbundes, eines Möbelstücks, einer Folienbeschichtung und / oder einer Fahrzeuginnenraumverkleidung.

### Beispiele:

### Methoden und verwendete Materialien:

**Softening Point Bestimmung:** Der Prüfkörper wird in einen Ofen gehängt und mit einem Gewicht von 4 kg belastet und der Ofen auf 40 °C aufgeheizt. Nach einer Verweilzeit von 20 Minuten bei 40 °C wird der Ofen mit einer Temperaturrampe von 0,5 °C/min hochgeheizt. Die Temperatur, bei der sich die Klebeverbindung trennt, ist der Softening Point.
**Desmodur^{®} N3600** lösemittelfreies Polyisocyanurat, basierend auf HDI der Bayer MaterialScience AG;
**Desmodur^{®} DN** lösemittelfreies hydrophil modifiziertes aliphatisches Polyisocyanat auf Basis von HDI der Bayer MaterialScience AG, Leverkusen;
**Dispercoll^{®} U 54** wässrige Polyurethandispersion der Bayer MaterialScience AG, Leverkusen; Feststoffgehalt 50 Gew.-%, Isocyanat-reaktives Polymer aus linearen Polyurethanketten auf Basis eines Polyesterpolyols mit HDI/IPDI als Isocyanatkomponente;
**Dispercoll^{®} U XP 2643** wässrige, anionisch hydrophilierte Dispersion eines hochmolekularen, nichtkristallisierenden Polyurethans der Bayer MaterialScience AG, Leverkusen;
**Desmocoll^{®} 540/5** weitgehend lineares, stark kristallisierendes elastisches Hydroxypolyurethan der Bayer MaterialScience AG, Leverkusen, eingesetzt als 15%ige Lösung in 2-Butanon (2-Butanon von Deutsche Shell GmbH);
**Butylacetat (BA)** Butylacetat 98/100 von Azelis, Antwerpen.

Die Rohstoffe wurden, soweit nicht anders erwähnt, ohne weitere Reinigung oder Vorbehandlung eingesetzt.
**Borchi^{®} Gel L 75 N** (Borchigel Verdicker) ein Polyurethane basierter Verdicker von Borchers GmbH, Deutschland

### Durchführung:

Auf zwei mit Isopropanol gereinigten PVC-Streifen (Breite 20 mm, Länge 50 mm, Höhe 4 mm) wurde jeweils auf 1 cm des 2 cm breiten Streifens mittels einem Pinsel eine ca. 200 µm dicke Schicht der Klebstoffdispersion, der Mischung aus Klebstoffdispersion mit dem jeweiligen Polyisocyanat, der Klebstofflösung oder der Mischung aus Klebstofflösung und dem jeweiligen Polyisocyanat aufgetragen. Die Mischungen der Komponenten wurden vor der Applikation vermischt und innerhalb ihrer Topfzeit verarbeitet (die Topfzeit einer 2-komponentigen Klebstoffmischung ist definiert als Zeit bis zur Verdopplung der Viskosität der Abmischung oder einer Vorreaktion, die zu einer Reduktion um > 50% der Anfangsfestigkeit der Verklebung führt).

Bei separatem Auftrag der Isocyanat-Komponente wurde der Auftrag mittels Digitaldrucker (Dimatix DMP 2831, Druckkopf DMC-11610 (16 Düsen und eine nominelle Tropfengröße von 10 pl)) entweder auf die zuvor vollständig getrocknete Klebstoff-Schicht, oder aber auf die nasse Klebstoff-Schicht direkt nach deren Auftrag durchgeführt. Wenn in der Tabelle nicht abweichend beschrieben, wurde dann 1h bei RT getrocknet. Anschließend wurden die kristallinen Klebstoffschichten mit einer IR-Lampe (Schockaktiviergerät Funck A 2000) thermoaktiviert (10 sec => Klebstofftemperatur ca. 90°C). Bei den lösemittelhaltigen, amorphen Systemen, die bereits bei Raumtemperatur klebrig sind, wurde keine Thermoaktivierung durchgeführt. Die vorbereiteten PVC-Streifen (Prüfkörper) wurden mit den Klebeflächen so aufeinandergelegt, dass die unbehandelten Enden in einer Linie voneinander wegzeigen. Im Anschluss wurde der Prüfkörper mit einer Presse 1 Minute bei 4 bar (außer wenn in Tabelle 1 abweichend angegeben) zusammengepresst. Der hergestellte Prüfkörper wurde 3 Tage bei Raumbedingung gelagert und anschließend die Softening Point Messung durchgeführt. Die Ergebnisse werden in Tabelle 1 dargestellt.

Es ist ersichtlich, dass mit dem erfindungsgemäßen Verfahren Verklebungen mit einem Softening Point auf demselben oder nur leicht niedrigeren Niveau eines vorvermischten 2K-Klebstoffsystems erzielt werden konnten.

**Tabelle 1:**

| Beispiel | Klebschicht und Auftrag | Beschreibung/Anmerkung | Softening Point |
|---|---|---|---|
| 1 (Vergleich) | Dispercoll^{®} U54, ca. 200 g/m² | 1K, ohne Polyisocyanat | 60°C |
| 2 (Vergleich) | Dispercoll^{®} U54, ca. 200 g/m² + Desmodur^{®} DN, ca. 8 g/m², vorgemischt | Standard für thermoaktivierbare, wässrigen 2K-Klebstoff **(2K-Standard)** mit hydrophiliertem Polyisocyanat. Die Komponenten wurden vor der Applikation gemischt. Desmodur^{®} DN wurde unverdünnt eingesetzt. | 108°C |
| 3 (Vergleich) | Dispercoll^{®} U54, ca. 200 g/m² + Desmodur^{®} N3600, 70 % in BA, ca. 10 g/m², vorgemischt | 2K-Klebstoff mit hydrophoben Polyisocyanat. Die Komponenten wurden vor der Applikation gemischt. | 107°C |
| 4 | Dispercoll^{®} U54, ca. 200 g/m² + Desmodur^{®} DN, 70 % in BA, | Der Softening Point liegt auf dem selben Niveau wie bei dem vorgemischten System | 109°C |
| | ca. 10 g/m², Desmodur^{®} DN nachträglich appliziert auf die nasse Schicht | | |
| 5 | Dispercoll^{®} U54, ca. 200 g/m² + Desmodur^{®} N3600, ca. 10 g/m², Desmodur^{®} N3600 nachträglich appliziert auf die nasse Schicht | Der Softening Point liegt auf dem selben Niveau wie bei dem vorgemischten System | 108°C |
| 6 | Dispercoll^{®} U54, ca. 200 g/m² + Desmodur^{®} DN, 70 % in BA, | Der Softening Point liegt auf leicht niedrigerem Niveau im Vergleich zu dem vorgemischten System | 96°C |
| | ca. 2 g/m², Desmodur^{®} DN nachträglich appliziert auf die nasse Schicht | | |
| 7 | Dispercoll^{®} U54, ca. 200 g/m² + Desmodur^{®} DN, 70 % in BA, | Bei einem Auftrag von 2 % Desmodur^{®} DN, 70 % in BA, bezogen auf die aufgetragene Menge Dispercoll^{®} U54, erreicht der Softening Points das Niveau des 2K Standards | 108°C |
| | ca. 4 g/m², Desmodur^{®} DN nachträglich appliziert auf die nasse Schicht | | |
| 8 | Dispercoll^{®} U54, ca. 200 g/m² + Desmodur^{®} DN, 70 % in BA, | Der Softening Point liegt auf dem selben Niveau wie bei dem vorgemischten System | 107°C |
| | ca. 6 g/m², Desmodur^{®} DN nachträglich appliziert auf die nasse Schicht | | |
| 9 | Dispercoll^{®} U54, ca. 200 g/m² + Desmodur^{®} DN, 70 % in BA, | Bei einem Auftrag von 10 % Desmodur^{®} DN, 70 % in BA, bezogen auf die aufgetragene Menge Dispercoll^{®} U54, erreicht der Softening Points das Niveau des 2K Standards | 109°C |
| | ca. 20 g/m², Desmodur^{®} DN nachträglich appliziert auf die nasse Schicht | | |
| 10 | Dispercoll^{®} U54, ca. 200 g/m² + Desmodur^{®} DN, 70 % in BA, | Der Softening Point liegt auch beim Auftrag des Polyisocyanates auf die getrocknete, thermoplastische Klebstoffschicht auf dem selben Niveau wie der 2K Standard | 108°C |
| | ca. 10 g/m², Desmodur^{®} DN nachträglich appliziert auf die zuvor 1h bei RT getrocknete Schicht | | |
| 11 | Dispercoll^{®} U54, ca. 200 g/m² + Desmodur^{®} DN, 70 % in BA, | Bei einem Anpressdruck von nur 0,1 bar liegt der Softening Point etwas unterhalb des Niveaus des 2K Standard. | 97°C |
| | ca. 10 g/m², Desmodur^{®} DN nachträglich appliziert auf die nasse Schicht Anpressdruck 0,1 bar anstatt 4 bar | | |
| 12 | Dispercoll^{®} U54, ca. 200 g/m² + Desmodur^{®} DN, 70 % in BA, | Bei einem Anpressdruck von nur 0,5 bar liegt der Softening Point auf dem selben Niveau wie beim 2K Standard. | 106°C |
| | ca. 10 g/m², Desmodur^{®} DN nachträglich appliziert auf die nasse Schicht, Anpressdruck 0,5 bar anstatt 4 bar | | |
| 13 | Dispercoll^{®} U54, ca. 200 g/m² + Desmodur^{®} DN, 70 % in BA, | Bei einem Anpressdruck von nur 0,1 bar liegt der Softening Point etwas unterhalb des Niveaus des 2K Standard. | 96°C |
| | ca. 10 g/m², Desmodur^{®} DN nachträglich appliziert auf die zuvor 1h bei RT getrocknete Schicht, ohne Trocknung nach der Applikation des Polyisocyanates, Anpressdruck 0,1 bar anstatt 4 bar | | |
| 14 | Dispercoll^{®} U54, ca. 200 g/m² + Desmodur^{®} DN, 70 % in BA, | Bei einem Anpressdruck von 0,5 bar liegt der Softening Point auf dem selben Niveau wie beim 2K Standard. | 108°C |
| | ca. 10 g/m², Desmodur^{®} DN nachträglich appliziert auf die zuvor 1h bei RT getrocknete Schicht, ohne Trocknung nach der Applikation des Polyisocyanates, Anpressdruck 0,5 bar anstatt 4 bar | | |
| 15 | Dispercoll^{®} U54, ca. 200 g/m², Trocknung über Nacht (ca. 20 h) + Desmodur^{®} DN, 70 % in BA, ca. 10 g/m² Desmodur^{®} DN nachträglich appliziert auf die zuvor getrocknete Schicht, ohne Trocknung nach der Applikation des Polyisocyanates | Auch eine Trocknung der Dispersionsschicht über 20h vor der Applikation des Polyisocyanates ist möglich. Der Softening Point liegt auf dem selben Niveau wie beim 2K Standard. | 108°C |
| 16 | Dispercoll^{®} U54, ca. 200 g/m², 1h bei RT Trocknung + 2. Auftrag Dispercoll^{®} U54, ca. 200 g/m², Trocknung 1h bei RT + | Bei einem dreifachen Auftrag der Klebstoffdispersion sowie der Verdreifachung der applizierten Polyisocyanatmenge (Verhältnis von Dispercoll U54 zu Desmodur DN annähernd konstant), erreicht der Softening Point das Niveau des 2K Standards. | 107°C |
| | 3. Auftrag Dispercoll^{®} U54, ca. 200 g/m², Trocknung über Nacht (ca. 20 h) + Desmodur^{®} DN, 70 % in BA, ca. 30 g/m² Desmodur^{®} DN nachträglich appliziert auf die zuvor getrockneten Schichten, ohne Trocknung nach der Applikation des Polyisocyanates | | |
| 17 (Vergleich) | Dispercoll^{®} U XP 2643, ca. 200 g/m² + Desmodur^{®} DN, ca. 8 g/m², vorgemischt, 1h RT Trocknung, ohne Thermoaktivierung verpresst | Standard für bei RT klebrige 2K-Klebstoffe mit unverdünntem hydrophiliertem Polyisocyanat. Die Komponenten wurden vor der Applikation gemischt. | 90°C |
| 18 | Dispercoll^{®} U XP 2643, ca. 200 g/m² + Desmodur^{®} DN, 70 % BA, ca. 10 g/m², nacheinander einzeln aufgetragen, nass in nass, 1h RT Trocknung, ohne Thermoaktivierung verpresst | Selbe Niveau wie zuvor gemischte Variante (Beispiel 17) | 88°C |
| 19 (Vergleich) | Desmocoll^{®} 540, ca. 200 g/m², 1K-System ohne Reaktionspartner | Standard für lösemittelhaltige Klebstoffe ohne Polyisocyanat | 82°C |
| 20 (Vergleich) | Desmocoll^{®} 540, ca. 200 g/m² + Desmodur^{®} DN, ca. 8 g/m², vorgemischt | Standard lösemittelhaltige 2K-Klebstoffe mit hydrophiliertem Polyisocyanat. Die Komponenten wurden vor der Applikation gemischt. Dass Desmodur^{®} DN wurde unverdünnt eingesetzt. | 108°C |
| 21 | Desmocoll^{®} 540, ca. 200 g/m² + Desmodur^{®} DN, 70 % in BA, | Der Softening Point liegt auf dem selben Niveau wie bei dem vorgemischte System (Beispiel 20) | 106°C |
| | ca. 10 g/m², Desmodur^{®} DN nachträglich appliziert auf die nasse Schicht | | |
| 22 (Vergleich) | Dispercoll^{®} U54, ca. 200 g/m² +1g Borchigel Verdicker vermischt und 24h bei RT in einem geschlossenen Gefäß gelagert + Desmodur^{®} DN 70% in BA, ca. 0,11 g/m², vorgemischt | Standard für thermoaktivierbare, wässrigen 2K-Klebstoffe **(2K-Standard)** mit hydrophiliertem Polyisocyanat. Die Komponenten wurden vor der Applikation gemischt. Desmodur^{®} DN wurde als 70%Lösung in BA eingesetzt. Die geringen Isocyanatmengen führen nicht zu einem ausreichend hohen Softening point | 70°C |
| 23 (Vergleich) | Dispercoll^{®} U54, ca. 200 g/m² +1g Borchigel Verdicker vermischt und 24h bei RT in einem geschlossenen Gefäß gelagert + Desmodur^{®} DN 70% in BA, ca. 0,25 g/m², vorgemischt | Standard für thermoaktivierbare, wässrigen 2K-Klebstoffe **(2K-Standard)** mit hydrophiliertem Polyisocyanat. Die Komponenten wurden vor der Applikation gemischt. Desmodur^{®} DN wurde als 70%Lösung in BA eingesetzt. Die geringen Isocyanatmengen führen nicht zu einem ausreichend hohen Softening point | 72°C |
| 24 (Vergleich) | Dispercoll^{®} U54, ca. 200 g/m² +1g Borchigel Verdicker vermischt und 24h bei RT in einem geschlossenen Gefäß gelagert + Desmodur^{®} DN 70% in BA, ca. 0,5 g/m², vorgemischt | Standard für thermoaktivierbare, wässrigen 2K-Klebstoffe **(2K-Standard)** mit hydrophiliertem Polyisocyanat. Die Komponenten wurden vor der Applikation gemischt. Desmodur^{®} DN wurde als 70%Lösung in BA eingesetzt. | 74°C |
| | | Die geringen Isocyanatmengen führen nicht zu einem ausreichend hohen Softening point | |
| 25 (Vergleich) | Dispercoll^{®} U54, ca. 200 g/m² +1g Borchigel Verdicker vermischt und 24h bei RT in einem geschlossenen Gefäß gelagert + Desmodur^{®} DN 70% in BA, ca. 1 g/m², vorgemischt | Standard für thermoaktivierbare, wässrigen 2K-Klebstoffe **(2K-Standard)** mit hydrophiliertem Polyisocyanat. Die Komponenten wurden vor der Applikation gemischt. Desmodur^{®} DN wurde als 70%Lösung in BA eingesetzt. | 76°C |
| | | Die geringen Isocyanatmengen führen nicht zu einem ausreichend hohen Softening point | |
| 26 (Vergleich) | Dispercoll^{®} U54, ca. 200 g/m² +1g Borchigel Verdicker vermischt und 24h bei RT in einem geschlossenen Gefäß gelagert + Desmodur^{®} DN 70% in BA, ca. 1,5 g/m², vorgemischt | Standard für thermoaktivierbare, wässrigen 2K-Klebstoffe **(2K-Standard)** mit hydrophiliertem Polyisocyanat. Die Komponenten wurden vor der Applikation gemischt. Desmodur^{®} DN wurde als 70%Lösung in BA eingesetzt. | 75°C |
| | | Die geringen Isocyanatmengen führen nicht zu einem ausreichend hohen Softening point | |
| 27 (Vergleich) | Dispercoll^{®} U54, ca. 200 g/m² +1g Borchigel Verdicker vermischt und 24h bei RT in einem geschlossenen Gefäß gelagert + Desmodur^{®} DN 70% in BA, ca. 2 g/m², vorgemischt | Standard für thermoaktivierbare, wässrigen 2K-Klebstoffe **(2K-Standard)** mit hydrophiliertem Polyisocyanat. Die Komponenten wurden vor der Applikation gemischt. Desmodur^{®} DN wurde als 70%Lösung in BA eingesetzt. | 104°C |
| 28 (Vergleich) | Dispercoll^{®} U54, ca. 200 g/m² +1g Borchigel Verdicker vermischt und 24h bei RT in einem geschlossenen Gefäß gelagert + Desmodur^{®} DN 70% in BA, ca. 10 g/m², vorgemischt | Standard für thermoaktivierbare, wässrigen 2K-Klebstoffe **(2K-Standard)** mit hydrophiliertem Polyisocyanat. Die Komponenten wurden vor der Applikation gemischt. Desmodur^{®} DN wurde als 70%Lösung in BA eingesetzt. | 114°C |
| 29 (Vergleich) | Dispercoll^{®} U54, ca. 200 g/m² +1g Borchigel Verdicker vermischt und 24h bei RT in einem geschlossenen Gefäß gelagert ohne Zumischung Desmodur^{®} DN | Standard für thermoaktivierbare, wässrigen 2K-Klebstoffe **(2K-Standard)** mit hydrophiliertem Polyisocyanat. Die Komponenten wurden vor der Applikation gemischt. | 68°C |
| 30 | Dispercoll^{®} U54, ca. 200 g/m² + Desmodur^{®} DN, 70 % in BA, | Der Softening Point liegt beim Auftrag des Polyisocyanates auf die nasse Klebstoffschicht auf höherem Niveau als der vorgemischte 2K Standard | 73°C |
| | ca. 0,11 g/m², Desmodur^{®} DN nachträglich appliziert nass in nass | | |
| 31 | Dispercoll^{®} U54, ca. 200 g/m² + Desmodur^{®} DN, 70 % in BA, | Der Softening Point liegt beim Auftrag des Polyisocyanates auf die nasse Klebstoffschicht auf deutlich höherem Niveau als der vorgemischte 2K Standard | 100°C |
| | ca. 0,25 g/m², Desmodur^{®} DN nachträglich appliziert nass in nass | | |
| 32 | Dispercoll^{®} U54, ca. 200 g/m² + Desmodur^{®} DN, 70 % in BA, | Der Softening Point liegt beim Auftrag des Polyisocyanates auf die nasse Klebstoffschicht auf deutlich höherem Niveau als der vorgemischte 2K Standard | 108°C |
| | ca. 0,5 g/m², Desmodur^{®} DN nachträglich appliziert nass in nass | | |
| 33 | Dispercoll^{®} U54, ca. 200 g/m² + Desmodur^{®} DN, 70 % in BA, | Der Softening Point liegt beim Auftrag des Polyisocyanates auf die nasse Klebstoffschicht auf deutlich höherem Niveau als der vorgemischte 2K Standard | 105°C |
| | ca. 1 g/m², Desmodur^{®} DN nachträglich appliziert nass in nass | | |
| 34 | Dispercoll^{®} U54, ca. 200 g/m² + Desmodur^{®} DN, 70 % in BA, | Der Softening Point liegt beim Auftrag des Polyisocyanates auf die nasse Klebstoffschicht auf deutlich höherem Niveau als der vorgemischte 2K Standard | 107°C |
| | ca. 1,5 g/m², Desmodur^{®} DN nachträglich appliziert nass in nass | | |
| 35 | Dispercoll^{®} U54, ca. 200 g/m² + Desmodur^{®} DN, 70 % in BA, | Der Softening Point liegt beim Auftrag des Polyisocyanates auf die nasse Klebstoffschicht auf leicht höherem Niveau wie der 2K Standard | 107°C |
| | ca. 2 g/m², Desmodur^{®} DN nachträglich appliziert nass in nass | | |
| 36 | Dispercoll^{®} U54, ca. 200 g/m² + Desmodur^{®} DN, 70 % in BA, | Der Softening Point liegt beim Auftrag des Polyisocyanates auf die nasse Klebstoffschicht auf vergleichbarem Niveau wie der 2K Standard | 110°C |
| | ca. 10 g/m², Desmodur^{®} DN nachträglich appliziert nass in nass | | |

Ein unerwartet deutlicher Anstieg des Softening Points konnte bei den erfindungsgemäß aufgebrachten Klebstoffschichten aus Klebstoff-Komponente (a) und Isocyanat-Komponente (b) festgestellt werden, wie im Vergleich mit vorgemischten Klebstoffmischungen aus Klebstoff-Komponente (a) und Isocyanat-Komponente (b) deutlich zu erkennen ist. Bereits bei einem Einsatz von mehr als 0,2 Teilen bis weniger als 0,5 Teilen Isocyanat-Komponente (b) auf 100 Teile Klebstoff-Komponente (a) konnte der Softening-Point um mehr als 20 °C erhöht werden verglichen mit dem Softening-Point einer vorgemischten 2K-Klebstoffmischung.

## Patentansprüche

1. Verfahren zum Verkleben von Substraten, umfassend folgende Schritte:
I) zwischen wenigstens zwei Substraten wird wenigstens eine Klebstoff-Komponente (a) und wenigstens eine Isocyanat-Komponente (b) aufgebracht;
II) die Substrate werden gegeneinander gepresst;
**dadurch gekennzeichnet, dass** im Schritt I) die Klebstoff-Komponente und die Isocyanat-Komponente separat auf das Substrat appliziert werden;
in Schritt I) auf beide Substrate zuerst die Klebstoff-Komponente (a) und dann zumindest auf einem Substrat auf die Klebstoff-Komponente (a) die Isocyanat-Komponente (b) aufgebracht wird und
die Klebstoff-Komponente (a) und die Isocyanat-Komponente (b) zeitversetzt aufgebracht werden.

2. Verfahren gemäß Anspruch 1, **dadurch gekennzeichnet, dass** die applizierte Klebstoff-Komponente (a) getrocknet und gegebenenfalls kristallisiert ist, bevor die Isocyanat-Komponente (b) aufgebracht wird.

3. Verfahren gemäß Anspruch 1 oder 2, **dadurch gekennzeichnet, dass** vor Schritt II) die Klebstoff-Komponente (b) wärmeaktiviert wird.

4. Verfahren gemäß einem der Ansprüche 1 bis 3, **dadurch gekennzeichnet, dass** die Isocyanat-Komponente (b) in Teilbereichen auf die Klebstoff-Komponente (a) aufgebracht wird.

5. Verfahren gemäß einem der Ansprüche 1 bis 4, **dadurch gekennzeichnet, dass** die Klebstoff-Komponente (a) auf Polyurethan basiert.

6. Verfahren gemäß einem der Ansprüche 1 bis 5, **dadurch gekennzeichnet, dass** die Klebstoffkomponente (a) eine wässrige Polyurethandispersion oder eine Polyurethanlösung in organischen Lösungsmitteln umfasst oder daraus besteht.

7. Verfahren gemäß einem der Ansprüche 1 bis 6, **dadurch gekennzeichnet, dass** die Isocyanat-Komponente (b) ausschließlich aliphatisch und/oder cycloaliphatisch gebundenen Isocyanatgruppen aufweist.

8. Verfahren gemäß einem der Ansprüche 1 bis 7, **dadurch gekennzeichnet, dass** die Isocyanat-Komponente (b) HDI oder Modifikationen von HDI, die Uretdion-, Isocyanurat-, Allophanat-, Biuret- und/oder Iminooxadiazindionstruktur aufweisen, enthält oder daraus besteht.

9. Verfahren gemäß einem der Ansprüche 1 bis 8, **dadurch gekennzeichnet, dass** auf 100 Gewichtsteile der Klebstoff-Komponente (a) (Feststoffgehalt) ≥ 0,5 und ≤ 30 Gewichtsteile der Isocyanat-Komponente (b) (Feststoffgehalt) eingesetzt werden.

10. Verfahren gemäß einem der Ansprüche 1 bis 8, **dadurch gekennzeichnet, dass** auf 100 Gewichtsteile der Klebstoff-Komponente (a) (Feststoffgehalt) ≥ 0,1 und ≤ 30 Gewichtsteile der Isocyanat-Komponente (b) (Feststoffgehalt) eingesetzt werden.

## Claims

1. Method for adhesively bonding substrates, comprising the following steps:
I) at least one adhesive component (a) and at least one isocyanate component (b) are applied between at least two substrates;
II) the substrates are pressed against one another;
**characterized in that** in step I) the adhesive component and the isocyanate component are applied separately to the substrate;
in step I) first the adhesive component (a) is applied to both substrates and then at least on one substrate the isocyanate component (b) is applied to the adhesive component (a), and
the adhesive component (a) and the isocyanate component (b) are applied with a time offset.

2. Method according to Claim 1, **characterized in that** the applied adhesive component (a) is in dried and optionally crystallized form before the isocyanate component (b) is applied.

3. Method according to Claim 1 or 2, **characterized in that** the adhesive component (b) is heat-activated before step II).

4. Method according to any of Claims 1 to 3, **characterized in that** the isocyanate component (b) is applied in sub-regions to the adhesive component (a).

5. Method according to any of Claims 1 to 4, **characterized in that** the adhesive component (a) is based on polyurethane.

6. Method according to any of Claims 1 to 5, **characterized in that** the adhesive component (a) comprises or consists of an aqueous polyurethane dispersion or a polyurethane solution in organic solvents.

7. Method according to any of Claims 1 to 6, **characterized in that** the isocyanate component (b) has exclusively aliphatically and/or cycloaliphatically bonded isocyanate groups.

8. Method according to any of Claims 1 to 7, **characterized in that** the isocyanate component (b) comprises or consists of HDI or modifications of HDI which have uretdione, isocyanurate, allophanate, biuret and/or iminooxadiazinedione structure.

9. Method according to any of Claims 1 to 8, **characterized in that** per 100 parts by weight of the adhesive component (a) (solids content) ≥ 0.5 and ≤ 30 parts by weight of the isocyanate component (b) (solids content) are used.

10. Method according to any of Claims 1 to 8, **characterized in that** per 100 parts by weight of the adhesive component (a) (solids content) ≥ 0.1 and ≤ 30 parts by weight of the isocyanate component (b) (solids content) are used.

## Revendications

1. Procédé de collage de substrats, comprenant les étapes suivantes :
I) entre au moins deux substrats, on applique au moins un composant adhésif (a) et au moins un composant isocyanate (b) ;
II) on presse les substrats l'un contre l'autre ;
**caractérisé en ce que,** dans l'étape I), le composant adhésif et le composant isocyanate sont appliqués séparément sur le substrat ;
dans l'étape I), on applique sur les deux substrats d'abord le composant adhésif (a), puis, au moins sur un substrat, on applique sur le composant adhésif (a) le composant isocyanate (b), et
on applique avec un décalage dans le temps le composant adhésif (a) et le composant isocyanate (b).

2. Procédé selon la revendication 1, **caractérisé en ce que** le composant adhésif (a) appliqué est séché et éventuellement cristallisé avant application du composant isocyanate (b).

3. Procédé selon la revendication 1 ou 2, **caractérisé en ce que**, avant l'étape II), le composant adhésif (b) est activé à la chaleur.

4. Procédé selon l'une des revendications 1 à 3, **caractérisé en ce qu'**on applique le composant isocyanate (b) dans des zones partielles sur le composant adhésif (a) .

5. Procédé selon l'une des revendications 1 à 4, **caractérisé en ce que** le composant adhésif (a) est à base de polyuréthane.

6. Procédé selon l'une des revendications 1 à 5, **caractérisé en ce que** le composant adhésif (a) comprend une dispersion aqueuse de polyuréthane ou une solution de polyuréthane dans des solvants organiques, ou en est constitué.

7. Procédé selon l'une des revendications 1 à 6, **caractérisé en ce que** le composant isocyanate (b) comprend exclusivement des groupes isocyanate à liaison aliphatique et/ou cycloaliphatique.

8. Procédé selon l'une des revendications 1 à 7, **caractérisé en ce que** le composant isocyanate (b) contient, ou en est constitué, du HDI ou des modifications du HDI qui présentent une structure d'uretdione, d'isocyanurate, d'allophanate, de biuret et/ou d'iminooxadiazinedione.

9. Procédé selon l'une des revendications 1 à 8, **caractérisé en ce qu'**on utilise pour 100 parties en poids du composant adhésif (a), exprimées en extrait sec, une quantité ≥ 0,5 et ≤ 30 parties en poids du composant isocyanate (b), exprimées en extrait sec.

10. Procédé selon l'une des revendications 1 à 8, **caractérisé en ce qu'**on utilise pour 100 parties en poids du composant adhésif (a), exprimées en extrait sec, une quantité ≥ 0,1 et ≤ 30 parties en poids du composant isocyanate (b), exprimées en extrait sec.
